# EUROPEAN PATENT APPLICATION

(11) **EP 2 190 249 A2**
(43) Date of publication of application: **26.05.2010**
(21) Application number: 09176413.4
(22) Date of filing: 18.11.2009
(51) Int. Cl.: H04W 72/10

(54) **Method for obtaining QoS differentiation in RAN sharing**

(30) Priority: 19.11.2008 ES 200803300
(71) Applicant: Vodafone Group PLC, Newbury Berkshire RG14 2FN (GB); Vodafone España, S.A., 28108 Alcobendas (ES)
(72) Inventor: Dominguez Romero, Francisco, E-28050, Madrid (ES); De Pasquale, Andrea, E-28050, Madrid (ES); Garriga Muñiz, Beatriz, E-28050, Madrid (ES); Capote Molina, Jose Angel, E-28050, Madrid (ES)
(74) Representative: Keston, David Arthur

(57) **Abstract**

Method for obtaining QoS differentiation in RAN sharing, wherein different operators share the radio network resources, each operator having its own QoS mapping tables for differentiating user priority levels according to a plurality of parameters, such as TC, ARP and THP. The method comprises:
- obtaining, from each user accessing the shared network, a PLMN-id parameter indicating the operator selected by the user;
- obtaining the priority level (SPI) of said user according to the PLMN-id parameter and the QoS mapping table of the selected operator.

The SPI parameter obtained can be applied for managing different resources.

## Description

### Field of the Invention

The present invention lies in the field of mobile communications, and more specifically in providing a set of techniques to obtain QoS differentiation in RAN (Radio Network Controller) sharing, when different operators share the radio network resources and users of each operator have different priority levels (e.g., gold, silver, bronze).

### Background of the Invention

QoS (Quality of Service) differentiation in the Radio Resource Management algorithms is mandatory when introducing flat-rate tariffs in the mobile networks. These tariffs combined with the new HSPA (High Speed Packet Access) capabilities of the 3G networks, produce a huge increase of the traffic reaching the saturation very often for the PS (Packet Switched) traffic.

Priority is defined per user and per APN (Access Point Name) in the HLR (Home Location Register). QoS attributes to define priority are TC (Traffic Class), ARP (Allocation Retention Priority) and THP (Traffic Handling Priority).

In access network QoS attributes are mapped to a priority (e.g. gold, silver, bronze).

In case of RAN (Radio Access Network) sharing, users from different operators share all resources (Radio and lub). Each operator has its own QoS mapping (e.g. for the operator 1 ARP=THP=1 is mapped to Gold and for the operator 2 ARP=THP=1= Silver).

To align QoS behaviour and avoid one operator to obtain more benefits in RAN sharing due to its QoS mapping it is necessary to provide a solution allowing the QoS mapping per operator. This way the present invention achieved avoiding operators sharing network with a specific operator to use resources in a not controlled way when using user differentiation features.

It is well-known that abbreviations and acronyms are frequently used in the mobile telephony field. Below is a glossary of acronyms/terms used throughout the present specification:

| | |
|---|---|
| 3G | 3^{rd} Generation |
| 3GPP | The 3rd Generation Partnership Project |
| APN | Access Point Name |
| ARP | Allocation Retention Priority |
| CN | Core Network |
| HLR | Home Location Register |
| HSPA | High Speed Packet Access |
| PLMN | Public Land Mobile Network |
| PS | Packet Switched |
| RAN | Radio Access Network |
| RNC | Radio Network Controller |
| RRM | Radio Resource Management |
| TC | Traffic Class |
| THP | Traffic Handling Priority |
| UE | User Equipment |
| UMTS | Universal Mobile Telecommunications System |

### Description of the Invention

The invention relates to a method for obtaining QoS differentiation in RAN sharing according to claim 1. Preferred embodiments of the method are defined in the dependent claims.

In the method object of the present invention the different operators share the radio network resources, each operator having its own QoS mapping tables for differentiating user priority levels according to a plurality of parameters. The comprises:
- obtaining, from each user accessing the shared network, a PLMN-id parameter indicating the operator selected by the user;
- obtaining the priority level of said user according to the PLMN-id parameter and the QoS mapping table of the selected operator.

The plurality of parameters used by the operators in their QoS mapping tables preferably comprises TC, ARP and THP parameters.

In a preferred embodiment the obtaining of the priority level for each user accessing the shared network is carried out by obtaining the SPI parameter.

The SPI parameter obtained can be applied for managing different resources.

### Brief Description of the Drawings

To complete the description and, in order to provide for a better understanding of the invention, a set of drawings is provided. Said drawings form an integral part of the description and illustrate preferred embodiments of the invention, which should not be interpreted as restricting the scope of the invention, but just as examples of how the invention can be embodied. The drawings comprise the following figures:

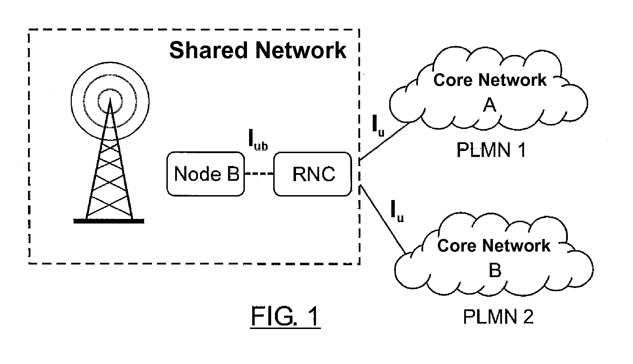

Figure 1 shows a RAN sharing scenario between two operators.

### Description of a Preferred Embodiment of the Invention

To avoid unfair use of resources in case of using load differentiation QoS techniques in RAN sharing scenario it is proposed to include the PLMN (Public Land Mobile Network) indicator in the QoS mapping tables.

In RAN sharing lub is shared and also frequency could be shared. One operator is the owner of the network and the other operators share the access resources.

**Figure 1** shows a RAN sharing scenario between two operators A and B. Core network and lu interfaces are independent for each vendor, access network (NodeB, lub/lur and RNC) is shared.

Network sharing is an agreement between the operators. For the users, it is transparent. Therefore, the UE (User Equipment) has to discriminate between the CN operators available in a shared RAN and that these operators can be handled in the same way as operators in non-shared networks. System broadcast information in the shared network should include the information of each cell and each CN operator in the shared RAN. The supporting UE decodes the system broadcast information to determine available CN operators in the shared network.

When a UE performs initial access to a shared network, it will select one of the available CN (Core Network) operators to serve it. UE shows the PLMN-id it has been registered. In the shared network, it is the PLMN-id of the selected CN operator.

The invention presented consists on including the PLMN-id as a parameter to map priorities.

One example of priority mapping often used in networks today is shown in the next table. Traffic Class has 4 possible values: Conversational, Streaming, Interactive and Background. Only Interactive and Background are used today for the PS services as they do not have any service guarantee requirement. THP is only applicable to the Interactive class.

| **Inputs** | | | **Output** |
|---|---|---|---|
| **TC** | **ARP** | **THP** | **SPI** |
| Interactive | 1 | 1 | 1 |
| Interactive | 2 | 2 | 5 |
| Interactive | 3 | 3 | 10 |
| Background | 1 | NA | 14 |

SPI (Scheduling Priority Indicator) defines the internal prioritization used by all RRM (Radio Resource Management) algorithms in access network. The SPI is applied to the algorithms managing different resources: radio scheduler, transport network (lub), baseband resources, etc. The SPI is configured according to the preferences of the operator.

**Table example for radio scheduler:**

| SPI | Scheduler weights |
|---|---|
| 1 | 90 |
| 2 | 60 |
| 3 | 30 |
| ... | ... |
| 16 | 2 |

**Table example for the transport network:**

| SPI | ATM class | IP DSCP |
|---|---|---|
| 1 | rtVBR | 41 |
| 2 | nrtVBR | 41 |
| 3 | nrtVBR | 42 |
| ... | ... | |
| 16 | UBR | 12 |

In case of RAN sharing there are two possibilities to map priorities:
1- To add PLMN-id parameter in current mapping tables, as shown in the example table below:

| **Inputs** | | | | **Output** |
|---|---|---|---|---|
| **TC** | **ARP** | **THP** | **PLMN-id** | **SPI** |
| Interactive | 1 | 1 | PLMN-1 | 1 |
| Interactive | 2 | 2 | PLMN-1 | 5 |
| Interactive | 3 | 3 | PLMN-1 | 10 |
| Background | 1 | NA | PLMN-1 | 14 |
| Interactive | 1 | 1 | PLMN-2 | 5 |
| Interactive | 2 | 2 | PLMN-2 | 1 |
| Interactive | 3 | 3 | PLMN-2 | 10 |
| Background | 1 | NA | PLMN-2 | 15 |

2- Add one mapping table per PLMN-id and using the corresponding mapping depending on the network the UE is connected to, as shown in the example below:

**PLMN-1:**

| **Inputs** | | | **Output** |
|---|---|---|---|
| **TC** | **ARP** | **THP** | **SPI** |
| Interactive | 1 | 1 | 1 |
| Interactive | 2 | 2 | 5 |
| Interactive | 3 | 3 | 10 |
| Background | 1 | NA | 14 |

**PLMN-2:**

| **Inputs** | | | **Output** |
|---|---|---|---|
| **TC** | **ARP** | **THP** | **SPI** |
| Interactive | 1 | 1 | 5 |
| Interactive | 2 | 2 | 1 |
| Interactive | 3 | 3 | 10 |
| Background | 1 | NA | 15 |

## Claims

1. Method for obtaining QoS differentiation in RAN sharing, wherein different operators share the radio network resources, each operator having its own QoS mapping tables for differentiating user priority levels according to a plurality of parameters, **characterized in that** it comprises:
- obtaining, from each user accessing the shared network, a PLMN-id parameter indicating the operator selected by the user;
- obtaining the priority level of said user according to the PLMN-id parameter and the QoS mapping table of the selected operator.

2. Method for obtaining QoS differentiation in RAN sharing according to claim 1, **characterized in that** the plurality of parameters used by the operators in their QoS mapping tables comprises TC, ARP and THP parameters.

3. Method for obtaining QoS differentiation in RAN sharing according to claim 1, **characterized in that** the obtaining of the priority level for each user accessing the shared network is carried out by obtaining the SPI parameter.

4. Method for obtaining QoS differentiation in RAN sharing according to claim 1, **characterized in that** the SPI parameter obtained is applied for managing different resources.
